# EUROPEAN PATENT SPECIFICATION

(11) **EP 4 493 515 B1**
(45) Date of publication and mention of the grant of the patent: **01.04.2026**
(21) Application number: 23710374.2
(22) Date of filing: 14.03.2023
(51) Int. Cl.: B01J 19/24, C01B 21/28, B01J 19/00, C01B 21/30

(54) **METHOD AND REACTOR FOR PREPARING NITRIC OXIDE**
VERFAHREN UND REAKTOR ZUR HERSTELLUNG VON STICKOXID
PROCÉDÉ ET RÉACTEUR POUR LA PRÉPARATION D'OXYDE NITRIQUE

(30) Priority: 16.03.2022 EP 22162394
(43) Date of publication of application: 22.01.2025
(73) Proprietor: BASF SE, 67056 Ludwigshafen am Rhein (DE)
(72) Inventor: EHRHARDT, Kai Rainer, 67056 Ludwigshafen am Rhein (DE); KOLIOS, Grigorios, 67056 Ludwigshafen am Rhein (DE); TITLBACH, Sven, 67056 Ludwigshafen am Rhein (DE); SENTKO, Matthias Martin, 67056 Ludwigshafen am Rhein (DE)
(74) Representative: BASF IP Association
(86) International application number: PCT/EP2023/056482
(87) International publication number: WO 2023/174935

(56) References cited:
- US-A- 4 873 061
- US-A- 882 958
- US-A1- 2017 022 426

## Description

### Technical field

The invention relates to a method for the production of nitric oxide from a gaseous reactant mixture containing oxygen and nitrogen in a reactor comprising a reaction zone with a heat input device and at least two regenerator zones fluidically connected to the reaction zone.

### Background of the invention

Nitric oxide, also named "nitrogen monoxide" and abbreviated by "NO", is an important intermediate product in chemical industry and is used for example for the production of nitric acid (HNO₃) and derivative products. In industrial scale, nitric oxide is nowadays produced by the catalytic oxidation of ammonia as an intermediate step to produce nitric acid according to the so-called "Ostwald process". Ammonia is typically produced by a gas-phase reaction of hydrogen and nitrogen in the so-called "Haber-Bosch process". Worldwide this requires approximately five million tons of hydrogen per year which comes along with greenhouse gas emissions equivalent to about fifty million tons carbon dioxide per year.

An alternative route to produce nitric oxide is the direct reaction of gaseous nitrogen with oxygen in an electric arc according to the so-called "Birkeland-Eyde process". This process was in use in the 1910s and 1920s and was later substituted by the Ostwald process. The main reason for its substitution was the high specific energy demand of about 28 MWh per ton NO compared to about 5.2 MWh per ton NO on the Steam-Methane-Reforming / Haber-Bosch / Ostwald route. A further challenge in direct synthesis of nitric oxide in the electric arc is the prevention of back-reactions. In the electric arc, where the NO synthesis takes place, the ionized gas (plasma) reaches temperatures of more than 5000 K (Kelvin). Downstream the arc, the product gas must be quenched to much lower temperatures in order to suppress the back-splitting of NO as much as possible. Due to the high reaction temperature and the required short quenching time, heat integration within the process, for example the direct thermal coupling of cooling the product stream and heating the feed stream, is not possible. A considerable part of the NO generated in the arc decomposes which reduces the yield.

The document US 882,958 published in 1908 discloses a process for manufacturing nitric acid from a moist mixture of nitrogen and oxygen by means of superheating in a reverse-flow reactor. The reactor is made of a fireproof material and has two heat regenerators with several conduits each connected to a reaction zone. The reaction zone is heated up to 2500°C by carbon electrodes extending into the furnace. Even though this process is capable of producing nitric oxide, it has the disadvantage that it cannot be operated continuously as it has to be interrupted from time to time to heat up the reaction zone by the carbon electrodes. The carbon electrodes would burn in the presence of oxygen which necessitates the separation of heating and NO formation. Furthermore, due to the design of this more than 110 years old process the quench rate for rapidly cooling down the reaction product in the heat regenerators is too low for an industrially applicable process. Back-splitting of NO would be significant leading to a prohibitively high energy consumption per ton of NO produced.

Document US 4,873,061 discloses an apparatus and a method for reacting mixtures of reactant gases containing nitrogen. The mixtures are reacted by being raised to very high temperatures at the focal plane of a solar concentrator when radiant energy is absorbed by a metal screen or other porous material in contact with the reactants at the focal plane of a solar concentrator. The resulting products of combined nitrogen are rapidly cooled in a unique heat transfer unit which rapidly transfers the heat of the product gases to the reactant gases and the rapid cooling of the product fixes the high temperature equilibrium proportions to achieve larger proportions of product than would be possible by gradual cooling. The heat that is transferred from the product gases to a set of clusters of metal tubes during one period of a cycle is transferred from the tubes to reactant gases during a second period of the cycle by a reversal of gas flow direction through the tubes and through the screen, the reversal also causing a second set of tubes, which was cooled by the transmission of reactant gases to the screen in the first period, to absorb heat from the products during the second period.

### Description of the invention

It is thus an object of the invention to provide a method and a reactor for preparing nitric oxide by direct oxidation of nitrogen in industrially relevant amounts while the required energy demand is significantly reduced compared to processes known in the prior art.

The object is achieved by a method according to claim 1 and a reactor according to claim 15. Advantageous variants of the method are presented in claims 2 to 14.

A first subject of the invention is a method for the production of nitric oxide from a gaseous reactant mixture containing oxygen and nitrogen in a reactor comprising a reaction zone with a heat input device and at least two regenerator zones, each regenerator zone having a low temperature section on one end and a high temperature section at the other end of the regenerator zone, the high temperature sections being fluidically connected to the reaction zone. The method comprises the steps of:
a) supplying heat through the heat input device to the reaction zone until a temperature of from 1500°C to 2500°C is reached in the reaction zone;
b) passing the reactant mixture through a first regenerator zone into the reaction zone in which the reactant mixture reacts to form a product mixture, passing the product mixture from the reaction zone through a second regenerator zone and withdrawing at least part of the product mixture from the second regenerator zone;
c) reversing the direction of flow and passing the reactant mixture through the second regenerator zone into the reaction zone in which the reactant mixture reacts to form a product mixture, passing the product mixture from the reaction zone through the first regenerator zone and withdrawing at least part of the product mixture from the first regenerator zone; and
d) reversing the direction of flow and periodically repeating steps b) and c).

The high temperature sections of the regenerator zones comprise a plurality of channels with a hydraulic diameter of 0.5 mm to 5 mm each, the inner walls of which are made of oxide ceramics.

A second subject of the invention is a reactor for the production of nitric oxide from a gaseous reactant mixture containing oxygen and nitrogen, the reactor comprising a reaction zone with a heat input device and at least a first regenerator zone and at least a second regenerator zone, each regenerator zone having a low temperature section on one end and a high temperature section at the other end of the regenerator zone, the high temperature sections of both regenerator zones being fluidically connected to the reaction zone. The heat input device is configured to supply heat to the reaction zone for maintaining a temperature of from 1500°C to 2500°C in the reaction zone. The first regenerator zone and the second regenerator zone are configured to pass the gaseous reactant mixture either through the first regenerator zone into the reaction zone and from the reaction zone through the second regenerator zone or through the second regenerator zone into the reaction zone and from the reaction zone through the first regenerator zone. The high temperature sections of both regenerator zones comprise a plurality of channels with a hydraulic diameter of 0.5 mm to 5 mm each, the inner walls of which are made of oxide ceramics.

The mode of operation according to the invention with periodically repeating steps b) and c) will also be termed "periodic-continuous operation" in the following.

The direct oxidation of nitrogen is a challenging reaction as the tendency of back-splitting nitric oxide to nitrogen and oxygen may strongly influence the desired yield. It has been found that coupling the reaction zone with regenerator zones according to the invention and operating the process in periodic-continuous operation mode significantly reduces back-splitting and thus increases the overall yield of the process. The regenerator zones have two functions which are interdependent. With respect to the avoidance of back-splitting the first task is to rapidly cool down the product mixture leaving the reaction zone to a temperature range that is low enough to stop the back-splitting reaction. The second task is to preheat the fresh reactant mixture in order to reduce the energy demand for heating up the reaction zone. Both tasks are fulfilled by regenerator zones fluidically coupled to the reaction zone, the high temperature sections of the regenerator zones comprising a plurality of channels with a hydraulic diameter of 0.5 mm to 5 mm each, the inner walls of which are made of oxide ceramics. The method and the reactor according to the invention allow to perform the synthesis of nitric oxide from elementary oxygen and nitrogen at a temperature level that allows heat integration within the process and minimizes the back-splitting of the generated nitric oxide.

The term "hydraulic diameter" has the meaning common in the art, namely the ratio D_{H} = 4 · A / P with A being the cross-sectional area of a flow channel and P being the wetted perimeter of the channel at the cross-section. More generally in case of a non-uniform cross-section of the flow channel, the hydraulic diameter is defined as the ratio D_{H} = 4 · V / S with V being the total wetted volume of the channel and S being the total wetted surface area.

A hydraulic diameter in the range from 0.5 mm to 5 mm in the high temperature sections allows a rapid cooling of the hot product mixture leaving the reaction zone and thus guarantees sufficiently high concentrations of the desired product nitric oxide at the outlet of the regenerator zones at a reasonable energy consumption for heating the reaction zone.

It has been found that for hydraulic diameters smaller than 0.5 mm the pressure drop over the reactor increases to unfavorable values. For hydraulic diameters larger than 5 mm it was observed that back-splitting of the formed product nitric oxide to nitrogen and oxygen increased resulting in a lower product concentration at the outlet. At the same time, the outlet temperature increased, leading to higher heat losses and a higher energy demand for maintaining the required temperature in the reaction zone.

### Preferred embodiments of the invention

In a preferred embodiment, the hydraulic diameter of the plurality of channels in the high temperature section of the regenerator zones is from 0.5 mm to 3 mm each.

The low temperature sections of the regenerator zones preferably comprise a plurality of channels, the inner walls of which are made of oxide ceramics as well. The hydraulic diameter of the channels is favorable in the range from 0.5 mm to 10 mm each, preferably in the range from 0.5 mm to 5 mm each. The cooling effect is not that important in the low temperature sections as it is in the high temperature sections. Thus, the hydraulic diameters in the low temperature sections may be larger than in the high temperature sections. Larger hydraulic diameters in the low temperature sections can have the positive effect of reducing the overall pressure drop.

In a preferred embodiment the hydraulic diameter of the plurality of channels increases from the high temperature section to the low temperature section. Preferably, the hydraulic diameter in the high temperature section is from 0.5 mm to 3 mm, whereas it is from 0.5 mm to 5 mm in the low temperature section.

In another preferred embodiment the hydraulic diameter of the plurality of channels is constant over the length of the regeneration zone. Depending on the type and design of the regenerator zones, a constant hydraulic diameter may be advantageous in terms of an easier assembling of the regenerator zones.

The term "inner wall" means that part of the channels or of the reaction zone that is in contact with the reactant mixture or the product mixture flowing through the channels or the reaction zone respectively.

The term "high temperature section" refers to that part of each regenerator zone that is fluidically connected to the reaction zone. The term "low temperature section" refers to that part of each regenerator zone from which the product mixture is withdrawn. The transition temperature between the high temperature section and the low temperature section of the regenerator zones is preferably from 1000°C to 2000°C, more preferably from 1200°C to 1800°C, most preferably from 1400°C to 1600°C. Thus, the minimum temperature inside the high temperature section of the regenerator zones is preferably from 1000°C to 2000°C, more preferably from 1200°C to 1800°C, most preferably from 1400°C to 1600°C, and the maximum temperature inside the low temperature section of the regenerator zones is preferably from 1000°C to 2000°C, more preferably from 1200°C to 1800°C, most preferably from 1400°C to 1600°C.

The gaseous reactant mixture may be any mixture that contains at least 5 vol.-% of oxygen and at least 5 vol.-% of nitrogen. Preferably, the gaseous reactant mixture contains from 10 vol.-% to 90 vol.-% of oxygen, more preferably from 15 vol.-% to 80 vol.-% of oxygen, most preferably from 20 vol.-% to 60 vol.-% of oxygen. Preferably, the gaseous reactant mixture contains from 10 vol.-% to 90 vol.-% of nitrogen, more preferably from 20 vol.-% to 85 vol.-% of nitrogen, most preferably from 40 vol.-% to 80 vol.-% of nitrogen. The molar ratio of nitrogen to oxygen is preferably from 0.1 to 10, more preferably from 0.25 to 4.

In a preferred embodiment, the gaseous reactant mixture is air. As air is abundantly available, costs for the feedstock are low.

In an alternative embodiment, the gaseous reactant mixture preferably contains from 30 vol.-% to 70 vol.-% of oxygen, more preferably from 40 vol.-% to 60 vol.-% of oxygen, most preferably from 45 vol.-% to 55 vol.-% of oxygen. In this embodiment, the gaseous reactant mixture preferably contains from 30 vol.-% to 70 vol.-% of nitrogen, more preferably from 40 vol.-% to 60 vol.-% of nitrogen, most preferably from 45 vol.-% to 55 vol.-% of nitrogen.

The molar ratio of nitrogen to oxygen is preferably from 0.4 to 5, more preferably from 0.65 to 3, most preferably from 0.8 to 2. It was found that reacting a composition of the gaseous reactant mixture in these preferred ranges at a temperature range of from 1500°C to 2500°C led to higher yields of nitric oxide at lower specific energy demands than using air as the reactant mixture. Thus, depending on cost considerations, the feedstock of the gaseous reactant composition can be chosen appropriately.

The gaseous reactant mixture may comprise further substances other than oxygen and nitrogen, for example argon, water or carbon dioxide. Preferably, the gaseous reactant mixture contains less than 10 vol.-% of further substances, more preferably less than 5 vol.-% of further substances, most preferably less than 1 vol.-% of further substances, in particular 0 vol.-% of further substances.

At temperatures of from 1500°C to 2500°C the reactant mixture is partly converted to nitric oxide according to the Zel'dovich mechanism in the reaction zone. By nature, this reaction mechanism and the thermodynamic equilibrium does not depend on the pressure. The pressure inside the reaction zone is preferably from 0.5 bar to 20 bar, more preferably from 0.8 bar to 10 bar, most preferably from 1 bar to 5 bar. The values refer to absolute pressure, i.e. bar (abs).

Atmospheric pressure or pressures close to atmospheric pressure are preferred, as this simplifies the design of the device.

It has been found that the temperature range of from 1500°C to 2500°C provides a good compromise between sufficient nitric oxide production and lifetime of the reactor. Below 1500°C the production rate of nitric oxide is insufficiently low due to slow kinetics of formation and low equilibrium concentration. The higher the temperature the more favourable is the chemical equilibrium and the faster is nitric oxide formation. On the other hand, stress and degradation to the ceramic wall material increases with higher temperatures. Furthermore, the reaction rate of back-splitting of the formed nitric oxide is favoured with increasing temperature. In preferred embodiments the temperature in the reaction zone is from 1800°C to 2500°C, more preferably from 2000°C to 2400°C, most preferably from 2150°C to 2300°C.

The product mixture in the reaction zone preferably contains from 0.4 to 4.2 vol.-% of nitric oxide, more preferably from 2 to 3.2 vol.-% of nitric oxide. The product mixture may further contain elementary oxygen and nitrogen as well as byproducts like nitrogen dioxide (NO₂) or nitrous oxide (N₂O). The concentrations of these byproducts are preferably two orders of magnitude, more preferably three orders of magnitude lower than the concentration of nitric oxide. The product mixture may further contain components present in the reactant mixture like water or carbon dioxide (CO₂) and their respective products of dissociation like hydrogen and carbon monoxide (CO).

In a preferred embodiment the space velocity in each regenerator zone during steps b) and c) is from 300 1/h to 50000 1/h, wherein the space velocity is the ratio of the standard volumetric flow rate of the reactant mixture or the product mixture through the regenerator zone and the empty volume of the regenerator zone. More preferably the space velocity is from 500 1/h to 30000 1/h, most preferably from 1000 1/h to 10000 1/h. The term "space velocity" means the ratio of a volumetric flow of a fluid stream and the volume of a flow channel that is flown through by that fluid stream. The unit of the space velocity is volume per time divided by volume and thus time⁻¹, for example (m³/h) / m³ and thus hour⁻¹ (1/h).

The choice of the space velocity in the preferred range has the advantageous effect of high nitric oxide production at reasonable energy demand. It has been found that low space velocities lead to insufficient nitric oxide yield, whereas for high space velocities the energy demand to compensate the convective heat losses increases to amounts that are unfavorable from an economical and environmental point of view.

It is further preferred that the cross-sectional load of the sum of all channels in each regenerator zone during steps b) and c) is from 0.5 kg/(m² s) to 10 kg/(m² s). The term "cross-sectional load" means the ratio of a flow rate of a fluid stream and the cross-sectional area of a flow channel that is flown through by that fluid stream. The cross-sectional area is determined in a plane perpendicular to the main direction of flow of the fluid stream. The unit of the cross-sectional load is amount of flow per time divided by area, for example kg/(m² s).

The gas-phase reaction to form nitric oxide is very fast and limited by chemical equilibrium. To reduce back-splitting of the formed nitric oxide, it is preferred to provide means for rapid cooling at the outlet of the reaction zone. The plurality of channels with a hydraulic diameter of 0.5 mm to 5 mm in the high temperature sections of the regenerator zones serve this purpose. In addition, other means for rapid cooling are possible, for example external cooling of the sections of the regenerator zones in immediate vicinity of the reaction zone.

Preferably, the cooling rate in the high temperature sections of the regenerator zones directly downstream of the reaction zone is in the range from 10000 to 100000 K/s (Kelvin per second), more preferably in the range from 50000 K/s to 100000 K/s. This has the advantageous effect that back-splitting of the formed nitric oxide to nitrogen and oxygen is significantly reduced compared to lower cooling rates. In the low temperature sections of the regenerator zones, the cooling rate is preferably in the range from 1000 to 100000 K/s, more preferably in the range from 500 to 100000 K/s.

In a preferred embodiment of the inventive method, the switchover between steps b) and c) takes place in each case after a period of from 5 seconds to 250 seconds, more preferably after a period of from 10 seconds to 120 seconds, most preferably after a period of from 20 seconds to 60 seconds. A switchover period lower than 5 seconds bears the risk that the efficiency and the production capacity are reduced, as a part of the product mixture remains in the regenerator zones and is then recycled into the reaction zone. Moreover, shorter switchover periods necessitate increasing numbers of switching operations which leads to higher wear of valves and other equipment. A switchover period higher than 250 seconds may lead to a decrease of efficiency of the energy recovery and to an increase of nitric oxide back-splitting in the regenerator zones. In both cases the specific energy demand of the process is increased.

According to the invention, at least part of the product mixture is withdrawn from the regenerator zones in each step b) and c). In a preferred embodiment, at least 95%, more preferably at least 99%, most preferably 100% of the product mixture is withdrawn from the regenerator zones in each step b) and c).

Preferably, the at least two regenerator zones are symmetrical with respect to the reaction zone. Within this context, "symmetrical" means that the regenerator zones are identical or very similar in terms of design, construction, material and their connection to the reaction zone. It is an advantage of this embodiment that a periodic-continuous operation is facilitated in an easy and stable manner.

Preferably, the reactor comprises at most 20, more preferably at most 10, most preferably at most 6 independently flowable regenerator zones, each single regenerator zone having a high temperature section at the end adjacent to the reaction zone and a low temperature section on the remote end, the respective high temperature sections being fluidly connected to the reaction zone.

In one embodiment, the reactor comprises an even number larger than two of regenerator zones, for example 4, 6, 8, 10, 12, 14, 16, 18 or 20 regenerator zones. Preferably, the regenerator zones are grouped in pairs in this embodiment. Each pair of regenerator zones is switched between steps b) and c) simultaneously, while the pairs of regenerator zones are switched alternately in relation to other pairs. Table 1 shows an example for a reactor with four regenerator zones. Regenerator zones 1 and 2 form the first pair, whereas regenerator zones 3 and 4 form the second pair. During switching period 1 the reactant mixture is fed to the reaction zone through regenerator zones 1 and 3, denoted by the term "in" in Table 1. The product mixture is withdrawn through regenerator zones 2 and 4 during this period, denoted by the term "out" in Table 1. At the end of switching period 1 the direction of flow is reversed for the second pair, i.e. regenerator zones 3 and 4. During period 2 the reactant mixture is fed to the reaction zone through regenerator zones 1 and 4, and the product mixture is withdrawn through regenerator zones 2 and 3. At the end of switching period 2 the direction of flow is reversed for the first pair, i.e. regenerator zones 1 and 2. At the end of switching period 3 the direction of flow is reversed for the second pair of regenerator zones again. At the end of switching period 4 the direction of flow is reversed for the first pair of regenerator zones again. The fifth period corresponds to the first period and the cycle of periodic switching starts anew.

**Table 1**

| period | 1 | 2 | 3 | 4 | 5 |
|---|---|---|---|---|---|
| regenerator zone 1 | in | in | out | out | in |
| regenerator zone 2 | out | out | in | in | out |
| regenerator zone 3 | in | out | out | in | in |
| regenerator zone 4 | out | in | in | out | out |

One advantage of this periodic switching of pairs of regenerator zones is a higher uniformity in composition and temperature profiles in the collecting outlet line of the reactor.

In another embodiment with more than two regenerator zones, the number of regenerator zones through which the reactant mixture is fed to the reaction zone is larger than the number of regenerator zones through which the product mixture is removed from the reaction zone during each switching period. For example, in an embodiment with three regenerator zones, the reactant mixture is fed to the reaction zone through two regenerator zones, and the product mixture is withdrawn from the reaction zone through the third regenerator zone. The three regenerator zones are switched in a way that each regenerator zone is used as the withdrawal line during a different switching period. As a further example, in an embodiment with four regenerator zones, the reactant mixture is fed to the reaction zone through three regenerator zones, and the product mixture is withdrawn from the reaction zone through the fourth regenerator zone. As a further example, in an embodiment with five regenerator zones, the reactant mixture may be fed to the reaction zone through three or four regenerator zones, and the product mixture is withdrawn from the reaction zone through two or one regenerator zone(s). One advantage of the unequal numbers of regenerator zones that are used for feeding the reactant mixture and withdrawing the product mixture is a shorter residence time and a steep temperature profile of the product mixture in the regenerator zones used for withdrawing the product. As a result, the concentration of nitric oxide in the product stream and the thermal efficiency of the process are favorably influenced.

The plurality of channels in each regenerator zone can be realized by any technique known in the art, for example by random or structured packings. Preferably the channels are realized as structured packings.

In case of random packings, the individual elements of the packings, for example spheres, have channels with a hydraulic diameter in the preferred ranges. Typically, such elements have an outer diameter of from 1 mm to 20 mm, preferably from 2 mm to 10 mm and are light weight. To prevent those elements becoming fluidized at high velocities of the gaseous flows of the reactant mixture or the product mixture, it is preferred to encase the elements inside the sections of the regenerators, for example by permeable sheets or grids.

In case of structured packings, it is preferred to arrange several channels in larger elements, for example tiles or bricks. Preferably, the channels run in parallel in those larger elements. Preferably, the high temperature section of the regenerator zones or at least that part of the high temperature section that is connected to the reaction zone is equipped with structured packings.

Preferably, the specific surface fraction of the packings in each regenerator zone is from 300 m²/m³ (square metres per cubic metre) to 4000 m²/m³, more preferably from 500 m²/m³ to 3000 m²/m³, most preferably from 1000 m²/m³ to 2000 m²/m³.

Preferably, the volumetric density of the packings in each regenerator zone is at least 600 kg/m³ (kilograms per cubic metre), more preferably at least 800 kg/m³, most preferably at least 1000 kg/m³. Preferably, the volumetric density of the packings in each regenerator zone is at most 5000 kg/m³.

Preferably, the length of individual elements of the packing is from 10 mm to 1500 mm, more preferably from 20 mm to 1000 mm, most preferably from 20 mm to 500 mm.

Preferably, the cross-sectional area of the packings in each regenerator zone is from10 cm² (square centimetres) to 10000 cm², more preferably from 20 cm² to 5000 cm², most preferably from 50 cm² to 1000 cm². In this context, the term "cross-sectional area of the packings" means the area of the packings in a plane perpendicular to the longitudinal axis of the regenerator zone.

Preferably, the total volume of the packings in each regenerator zone is from 10 cm³ (cubic centimetres) to 50000 cm³, more preferably from 20 cm³ to 25000 cm³, most preferably from 50 cm³ to 10000 cm³.

Preferably, the void fraction in each regenerator zone is from 0.1 to 0.8, more preferably from 0.2 to 0.7, most preferably from 0.25 to 0.6. In this context, the term "void fraction" means the ratio of the volume of each regenerator zone that is not filled with packings and the total inner volume of the respective regenerator zone.

Random packings and structured packings may also be combined, for example structured packings in the high temperature section and random packings in the low temperature section of a regenerator zone. In that case, the structured packings may also serve as flow barriers for the random packings as alternatives or in addition to encasings of the random packings.

In case of packings, it is further preferred that the material of the packing is the same material as that of the inner wall of the channels. Preferably, the material is selected from the group of magnesium oxide, calcium oxide, yttrium oxide, zirconium(IV) oxide, aluminium oxide, silicon dioxide, mullite, cordierite and/or mixtures thereof. In the high temperature sections or at least a part of the high temperature sections of the regenerator zones, the material is preferably selected from the group of magnesium oxide, calcium oxide, yttrium oxide, zirconium(IV) oxide and/or mixtures thereof.

It is further preferred that the elements comprising the channels are arranged in a way that bypasses around the elements and between the elements and the inner walls of the regenerators are minimized. In the case of structured packings for example, monolithic blocks may be glued together with a suitable ceramic adhesive. Alternatively, monolithic blocks may be placed between trays that seal the gap between the blocks. Alternatively, gaps between the monolithic blocks may be filled with granules for example

In a preferred embodiment, the regenerator zones are provided as tubes or chambers with a longitudinal axis that are equipped with random packings or structured packings. Preferably the tubes or chambers are arranged such that their longitudinal axis is substantially vertical. The term "substantially vertical" means that the deviation of the longitudinal axis of the tube or chamber from the vertical is not larger than 45°. More preferably, this deviation is not larger than 25°, even more preferably not larger than 15°, in particular not larger than 5°.

Preferably, the regenerator zones are structured in subsequent sections from one end to the other end of the regenerator zone, wherein the sections differ from each other in the composition of the packaging material, in the structure of the packaging material and/or in the hydraulic diameter of the packaging material. The maximum number of sections is preferably 10, more preferably 5, most preferably 3.

In a preferred embodiment, the ratio of the free volume of the reaction zone to the sum of the free volumes of the regenerator zones is from 0.7 to 10, more preferably from 1 to 5. The advantage of this ratio is that the residence time in the reaction zone is sufficient to drive the conversion close to the equilibrium conversion and to attain an efficient heat recovery.

The inner surface of the reaction zone is manufactured from a material that is able to durably withstand the high temperatures inside the reaction zone. Preferably, the surface of the inner wall of the reaction zone is made of oxide ceramics.

The oxide ceramics for the inner walls of the plurality of channels in at least a part of the high temperature sections of the regenerator zones, more preferably in the entire high temperature sections of the regenerator zones, and optionally for the surface of the inner wall of the reaction zone are preferably selected from the group of magnesium oxide, calcium oxide, yttrium oxide, zirconium(IV) oxide and/or mixtures thereof. The oxide ceramics for the inner walls of the plurality of channels in the low temperature sections of the regenerator zones are preferably selected from the group of magnesium oxide, calcium oxide, yttrium oxide, zirconium(IV) oxide, aluminium oxide, silicon dioxide, mullite, cordierite and/or mixtures thereof.

The reaction zone is heated to a temperature of from 1500°C to 2500°C in step a) of the method according to the invention. Methods and devices are preferred that are able to heat up the reaction zone and keep the temperature in the desired range in a stable manner and with low energy effort. In one preferred embodiment, the heat input device comprises an arc source, a microwave source or a plasma source, in particular a plasma torch. Preferably, the plasma source is selected from a DC plasma, AC plasma, RF plasma or microwave plasma. It is further preferred that the individual plasma sources have a high specific enthalpy, thus reducing the number of individual heat sources needed to obtain a desired production capacity. The specific enthalpy of the plasma is preferably from 5 MJ/kg to 200 MJ/kg.

In embodiments with a plasma source, a sheath gas is preferably added to a plasma gas flow at the outlet of the plasma source. The ratio of volumetric flow rates of the sheath gas and the plasma gas is preferably from 0 to 50, more preferably from 1 to 20. The plasma gas and the sheath gas preferably contain nitrogen as the main component with a volume fraction of nitrogen higher than 90%, more preferably higher than 95%, most preferably higher than 99%.

In embodiments where a heating gas, for example a plasma gas and an optional sheath gas, is used as a heat input, the ratio of volumetric flow rates of the heating gas and the gaseous reactant mixture through the reaction zone is preferably from 0.1% to 10%, more preferably from 0.2% to 5%, particularly preferably from 0.3% to 3%. It has been found that with an increasing ratio the nitric oxide concentration in the product stream decreases and the specific energy requirement of the reactor increases.

In another preferred embodiment, the heat input device comprises an electric heater, an induction heater or a resistance heater. In another preferred embodiment, the heat input device comprises a burner which burns gaseous or liquid fuels, for example hydrogen, natural gas or fuel oil. In another preferred embodiment, the heat input device comprises injection ports which feed a decomposable gas, for example nitrous oxide into the reaction zone.

Combinations of heat input devices are also possible. In a further preferred embodiment, the heat input device comprises a combination of at least two single heat input devices selected from the group of arc sources, microwave sources, plasma sources, in particular plasma torches, electric heaters, induction heaters, resistance heaters and burners which burn gaseous or liquid fuels.

Depending on the type of equipment, for example the type of heat input device, and operating parameters, it can be advantageous to withdraw part of the product mixture from the reaction zone. In one embodiment, the reaction zone has a withdrawal line through which a part of the product mixture is withdrawn while flowing through the reaction zone. The withdrawal of a part of the product mixture from the reaction zone before entering the regenerator zone changes the heat capacity flow and the temperature profile in the regenerator zone. A lower temperature in the high temperature section reduces the risk of back-splitting of the formed nitric oxide. Furthermore, a lower temperature at the outlet of the regenerator zone can be achieved. In a preferred embodiment, an amount of from 0 vol.-% to 3 vol.-%, more preferably from 0.5 vol.-% to 1.5 vol.-% of the product mixture is removed from the reaction zone through a withdrawal line before entering the regenerator zone.

In embodiments where the heat input device comprises a plasma source, it is preferred that the ratio of volumetric flow rates of the product mixture withdrawn from the reaction zone through a withdrawal line and the heating gas is from 0 to 2, more preferably from 0.5 to 1.5, particularly preferably from 0.8 to 1.2. It has further been found that especially in cases where additional hot gas is introduced into the reaction zone, the removal of a part of the product mixture from the reaction zone before entering the regenerator zone has an advantageous effect on the temperature profile in the regenerator zone and suppresses back-splitting of formed nitric oxide as well as the energy demand of the reactor.

The reaction zone is preferably designed in a fluidically optimal way, for example enabling a uniform mixing and avoiding dead zones of the flowing gas. The reaction zone may be empty or may be equipped with internals, for example for guiding the flowing gas. In a preferred embodiment, the reaction zone has a tapering of the cross-sectional area through which the gaseous mixtures can flow in the region of the heat input device.

Preferably, the reactor comprises pipes for feeding the reactant mixture to and discharging the product mixture from the regenerator zones, the pipes having shut-off members configured such that the direction of flow through the reactor is reversible by switching the shut-off members.

Form and size of the reactor can be adapted to the conditions, for example the installation space available. In one preferred embodiment, the regenerator zones are arranged on opposite sides of the reaction zone.

In another preferred embodiment, the regenerator zones are arranged on the same side of the reaction zone, and the inner wall of the reaction zone has a curvature for diverting the flow from the outlet of one regenerator zone into the inlet of the other regenerator zone.

### Detailed description

The invention is explained in more detail below with reference to the drawings. The drawings are to be interpreted as in-principle presentation. They do not constitute any restriction of the invention, for example with regards to specific dimensions or design variants. In the figures:
- Fig. 1: shows a flow sheet of a reactor with electrical heating as a first embodiment of the invention.
- Fig. 2: shows a flow sheet of a reactor with a plasma torch and a withdrawal line in the reaction zone as a second embodiment of the invention.
- Fig. 3: shows a three-dimensional cut-off view of an exemplary embodiment of a reactor according to Fig. 2.
- Fig. 4: shows a flow sheet of a reactor with a curved reaction zone as a third embodiment of the invention.
- Fig. 5: shows a flow sheet of a reactor with four regenerator zones as a fourth embodiment of the invention.
- Fig. 6: shows temperature profiles for an example of the first embodiment according to Fig. 1.
- Fig. 7: shows temperature and mass fraction profiles for an example of the second embodiment according to Fig. 2.
- Fig. 8: shows temperature and mass fraction profiles for a further example of the second embodiment according to Fig. 2.

### List of reference numerals used:

- 1: reaction zone
- 2: heating device
- 3: first regenerator zone
- 4: second regenerator zone
- 5: third regenerator zone
- 6: fourth regenerator zone
- 7: withdrawal line
- 8: baffle
- 9: monolithic block
- V1: inlet shut-off member for first regenerator zone
- V2: outlet shut-off member for first regenerator zone
- V3: inlet shut-off member for second regenerator zone
- V4: outlet shut-off member for second regenerator zone
- V5: inlet shut-off member for third regenerator zone
- V6: outlet shut-off member for third regenerator zone
- V7: inlet shut-off member for fourth regenerator zone
- V8: outlet shut-off member for fourth regenerator zone

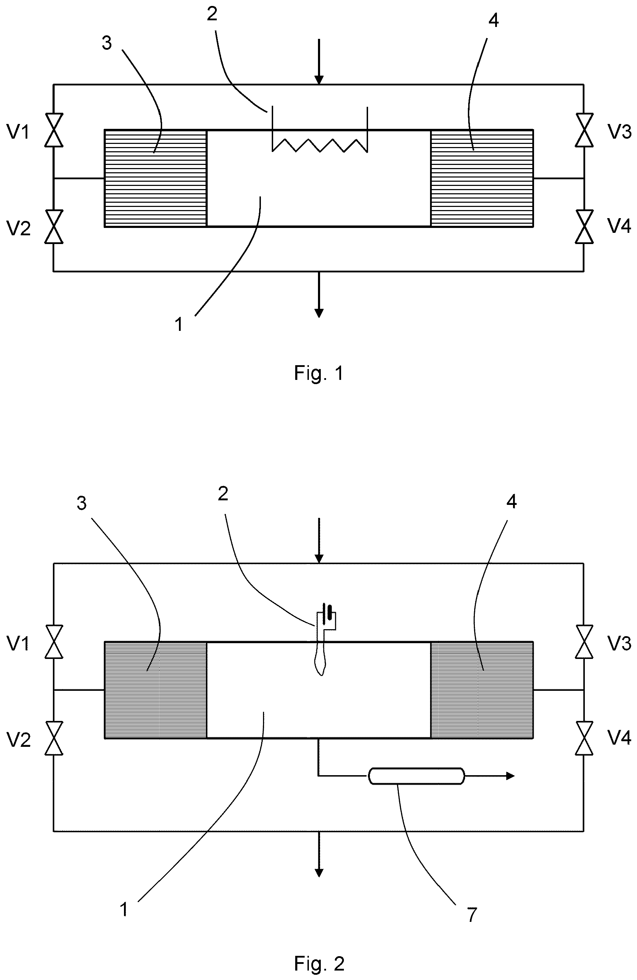

Fig. 1 schematically shows a flow sheet of a reactor with electrical heating for the production of nitric oxide from a gaseous reactant mixture containing oxygen and nitrogen as a first embodiment of the invention. The reactor comprises a reaction zone 1 with a heat input device 2. In the example according to Fig. 1 the heat input device 2 is based on electrical heating and comprises an electric heater, preferably an induction heater or a resistance heater.

The reactor further comprises a first regenerator zone 3 and a second regenerator zone 4 that are fluidically connected to the reaction zone 1. The two regenerator zones 3, 4 are symmetrical with respect to the reaction zone 1 and are arranged on opposite sides of the reaction zone 1. The regenerator zones comprise a plurality of separated or interconnected channels with a hydraulic diameter of 0.5 mm to 5 mm each, the inner walls of which are made of oxide ceramics. The channels of the regenerator zones may be designed as structured packings. The surface of the inner wall of the reaction zone 1 may be made of oxide ceramics as well. The oxide ceramics may comprise magnesium oxide, calcium oxide, yttrium oxide, zirconium(IV) oxide and/or mixtures thereof.

The reactor comprises pipes for feeding the reactant mixture to and discharging the product mixture from the regenerator zones 3, 4. The pipes have shut-off members V1, V2, V3, V4 configured such that the direction of flow through the reactor is reversible by switching the shut-off members. In a first mode of flow the inlet shut-off member V1 for the first regenerator zone 3 and the outlet shut-off member V4 for the second regenerator zone 4 are open, whereas the inlet shut-off member V3 for the second regenerator zone 4 and the outlet shut-off member V2 for the first regenerator zone 3 are closed. In this first mode of flow a reactant mixture entering the inlet pipe flows through the first regenerator zone 3 into the reaction zone 1 where the reactant mixture reacts to form a product mixture. The product mixture flows from the reaction zone 1 through the second regenerator zone 4 and is withdrawn from the second regenerator zone 4 through the outlet line.

In a second mode of flow the direction of flow is reversed. In this second mode of flow the inlet shut-off member V3 for the second regenerator zone 4 and the outlet shut-off member V2 for the first regenerator zone 3 are open, whereas the inlet shut-off member V1 for the first regenerator zone 3 and the outlet shut-off member V4 for the second regenerator zone 4 are closed. In this second mode of flow a reactant mixture entering the inlet pipe flows through the second regenerator zone 4 into the reaction zone 1 where the reactant mixture reacts to form a product mixture. The product mixture flows from the reaction zone 1 through the first regenerator zone 3 and is withdrawn from the first regenerator zone 3 through the outlet line. The shut-off members V1, V2, V3, V4 can be any suitable devices known from the prior art, for example control valves.

Fig. 2 schematically shows a flow sheet of a reactor with a plasma torch as heat input device 2 for the production of nitric oxide from a gaseous reactant mixture containing oxygen and nitrogen as a second embodiment of the invention. This second embodiment exemplified in Fig. 2 is similar to the first embodiment shown in Fig. 1. The main differences are the heat input source 2 and an additional withdrawal line 7 in the reaction zone 1.

The plasma torch 2, which generally has a generally rotationally symmetric shape, comprises a central cathode and an annular anode surrounding this cathode. More specifically, the cathode, generally made of tungsten, has the shape of a cylindrical rod terminated by a tapered end of conical shape. The anode, generally made of copper, has a cylindrical recess in which the cathode is received. An annular space formed between the cathode and the anode makes it possible to inject a plasma gas. The cylindrical recess formed in the anode extends beyond the tip of the tapered end of the cathode by a portion of reduced diameter delimiting an outlet orifice for the plasma gas. This outlet orifice opens onto the flat end face of the anode. This face is perpendicular to the rotation axis. By establishing an electrical voltage between the cathode and the anode, ranging from 200 VDC to 400 VDC, the plasma gas introduced is ionized to form a plasma. Taking into account the shape of the tapered end of the cathode and of the reduced diameter of the outlet orifice, this plasma is confined in the orifice. Furthermore, channels formed in the anode make it possible to introduce into the plasma leaving the torch an enveloping gas stream. The channels end at the planar face end of the anode and are inclined towards the rotation axis, in order to direct the enveloping gas stream towards the plasma. In certain known torches, the channels are replaced by an annular chamber formed in the anode and whose part opening onto the end face of the anode is directed towards the axis of the torch, to present approximately the shape of a funnel. The enveloping gas stream is then injected tangentially to the wall of the annular chamber, so that it travels in this chamber along an approximately helical path, up to the plasma leaving the torch.

The additional withdrawal line 7 provides flexibility to influence the temperature profile inside the reactor as is demonstrated in Example 3 below. In the example shown in Fig. 2 the withdrawal line 7 is equipped with a heat exchanger for rapid cooling of the gas stream taken off from the reaction zone 1.

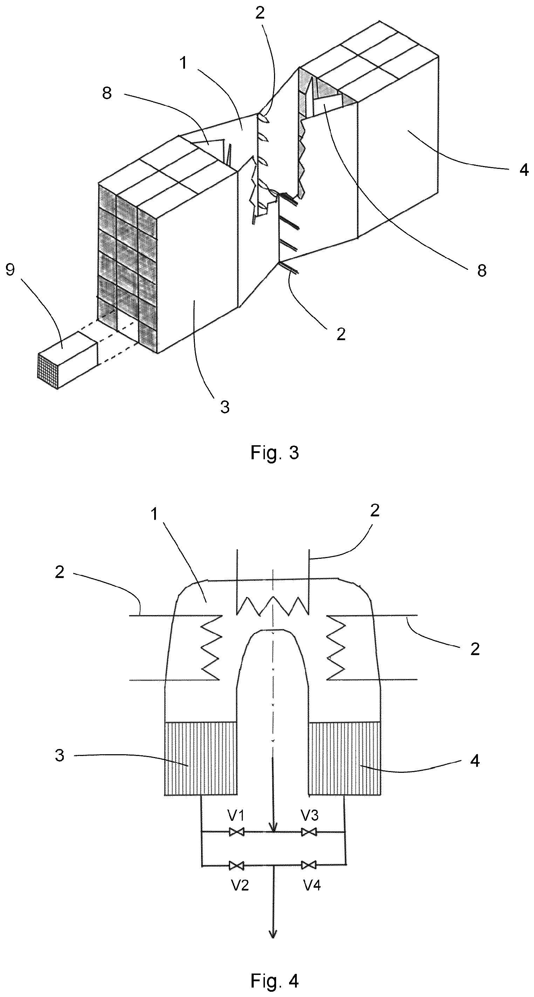

An exemplary embodiment of a reactor according to Fig. 2 is shown in Fig. 3 in a three-dimensional partially cut-off view. The reactor has an essentially rectangular outer shape. The first regenerator zone 3 and the second regenerator zone 4 are composed of structured packings in form of monolithic blocks 9 stacked in all three directions of space. In the example shown each zone comprises thirty-six monolithic blocks 9. Regenerator zone 3 and regenerator zone 4 comprise two segments. In the segment facing the reaction zone, the monolithic blocks 9 comprise a plurality of channels with a hydraulic diameter of 0.5 mm to 5 mm each. The inner walls of the channels are made of oxide ceramics. The oxide ceramics may comprise magnesium oxide, calcium oxide, yttrium oxide, zirconium(IV) oxide, and/or mixtures thereof. In the segment facing away from the reaction zone, the monolithic blocks 9 comprise a plurality of channels with a hydraulic diameter of 0.5 mm to 10 mm each. The inner walls of the channels are made of oxide ceramics. The oxide ceramics may comprise magnesium oxide, calcium oxide, yttrium oxide, zirconium(IV) oxide, aluminum oxide, mullite, cordierite, silicon dioxide and/or mixtures thereof. The two regenerator zones 3, 4 are symmetrically arranged with respect to the reaction zone 1 on opposite sides of the reaction zone 1.

The reaction zone 1 is designed symmetrical as well in the sense that the heat input device 2 is arranged in the middle of the reaction zone 1 and the spaces between the plane of the heat input device and the front plane of the first regenerator zone 3 on the one hand and between the plane of the heat input device and the front plane of the second regenerator zone 4 on the other hand are designed in the same manner. The heat is provided by several plasma torches 2 arranged on both sides of the reaction zone 1 perpendicular to the front planes of the regenerator zones. The side walls of the reaction zone 1 are inclined towards the interior such that the reaction zone 1 shows a tapering of the cross-sectional area through which the gaseous mixtures can flow in the region of the heat input device 2. Baffles 8 are arranged on the front planes of the first regenerator zone 3 and the second regenerator zone 4 in order to direct the gaseous flow into or out of the regenerator zones in a uniform manner.

Fig. 4 schematically shows a flow sheet of a reactor with electrical heating for the production of nitric oxide from a gaseous reactant mixture containing oxygen and nitrogen as a third embodiment of the invention. The reactor comprises a reaction zone 1 with a heat input device 2. In the example according to Fig. 4 the heat input device 2 is based on electrical heating and comprises three electric heaters, induction heaters or resistance heaters.

The reactor further comprises a first regenerator zone 3 and a second regenerator zone 4 that are fluidically connected to the reaction zone 1. The two regenerator zones 3, 4 are symmetrical with respect to the reaction zone 1 and are arranged on the same side of the reaction zone 1. The inner wall of the reaction zone 1 has a curvature for diverting the flow from the outlet of one regenerator zone 3, 4 into the inlet of the other regenerator zone 4, 3. The regenerator zones comprise a plurality of channels with a hydraulic diameter of 0.5 mm to 5 mm each, the inner walls of which are made of oxide ceramics. The channels of the regenerator zones may be designed as structured packings. The surface of the inner wall of the reaction zone 1 may be made of oxide ceramics as well. The oxide ceramics may comprise magnesium oxide, calcium oxide, yttrium oxide, zirconium(IV) oxide and/or mixtures thereof.

The reactor comprises pipes for feeding the reactant mixture to and discharging the product mixture from the regenerator zones 3, 4. The pipes have shut-off members V1, V2, V3, V4 configured such that the direction of flow through the reactor is reversible by switching the shut-off members. In a first mode of flow the inlet shut-off member V1 for the first regenerator zone 3 and the outlet shut-off member V4 for the second regenerator zone 4 are open, whereas the inlet shut-off member V3 for the second regenerator zone 4 and the outlet shut-off member V2 for the first regenerator zone 3 are closed. In this first mode of flow a reactant mixture entering the inlet pipe flows through the first regenerator zone 3 into the reaction zone 1 where the reactant mixture reacts to form a product mixture. The product mixture flows from the reaction zone 1 through the second regenerator zone 4 and is withdrawn from the second regenerator zone 4 through the outlet line.

In a second mode of flow the direction of flow is reversed. In this second mode of flow the inlet shut-off member V3 for the second regenerator zone 4 and the outlet shut-off member V2 for the first regenerator zone 3 are open, whereas the inlet shut-off member V1 for the first regenerator zone 3 and the outlet shut-off member V4 for the second regenerator zone 4 are closed. In this second mode of flow a reactant mixture entering the inlet pipe flows through the second regenerator zone 4 into the reaction zone 1 where the reactant mixture reacts to form a product mixture. The product mixture flows from the reaction zone 1 through the first regenerator zone 3 and is withdrawn from the first regenerator zone 3 through the outlet line. The shut-off members V1, V2, V3, V4 can be any suitable devices known from the prior art, for example control valves.

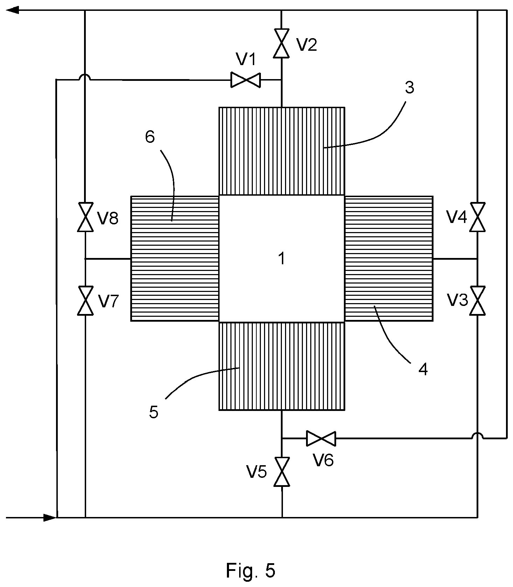

Fig. 5 schematically shows a flow sheet of a reactor with four regenerator zones as a fourth embodiment of the invention. The reactor comprises a reaction zone 1 with a heat input device (not shown in Fig. 5). The heat input device may comprise an arc source, a microwave source, a plasma source, an electric heater, an induction heater, a resistance heater or a combination of such heat input devices.

The reactor further comprises a first regenerator zone 3, a second regenerator zone 4, a third regenerator zone 5 and a fourth regenerator zone 6 that are fluidically connected to the reaction zone 1. In the example shown in Fig. 5 the reaction zone 1 has a square cross-section with four equal sides. The regenerator zones 3, 4, 5, 6 are symmetrical with respect to the reaction zone 1 and are arranged on all four sides of the reaction zone 1 such that pairs of two regenerator zones are arranged on opposite sides of the reaction zone 1. The regenerator zones comprise a plurality of separated or interconnected channels with a hydraulic diameter of 0.5 mm to 5 mm each, the inner walls of which are made of oxide ceramics. The channels of the regenerator zones may be designed as structured packings. The surface of the inner wall of the reaction zone 1 may be made of oxide ceramics as well. The oxide ceramics may comprise magnesium oxide, calcium oxide, yttrium oxide, zirconium(IV) oxide and/or mixtures thereof.

The reactor comprises pipes for feeding the reactant mixture to and discharging the product mixture from the regenerator zones 3, 4, 5, 6. The pipes have inlet shut-off members V1, V3, V5, V7 connected to the feed line and outlet shut-off members V2, V4, V6, V8 connected to the outlet line. The shut-off members are configured such that the direction of flow through the reactor is reversible by switching the shut-off members.

The reactor according to Fig. 5 can be operated in different switching modes. In a first switching mode, the regenerator zones are grouped in pairs, the two regenerator zones in each pair being switched simultaneously with respect to the direction of flow through the regenerator zones. As an example, the first regenerator zone 3 and the second regenerator zone 4 form a first pair, whereas the third regenerator zone 5 and the fourth regenerator zone 6 form a second pair.

During a first switching period the reactant mixture is fed to the reaction zone 1 through the first regenerator zone 3 and the third regenerator zone 5. The product mixture is withdrawn through the second regenerator zone 4 and the fourth regenerator zone 6 during this period. Inlet shut-off members V1 and V5 and outlet shut-off members V4 and V8 are open, whereas the remaining shut-off members V2, V3, V6 and V7 are closed during this first switching period.

At the end of the first switching period the direction of flow is reversed for the second pair, i.e. the third regenerator zone 5 and the fourth regenerator zone 6. During a second switching period the reactant mixture is fed to the reaction zone 1 through the first regenerator zone 3 and the fourth regenerator zone 6, and the product mixture is withdrawn through the second regenerator zone 4 and the third regenerator zone 5. Inlet shut-off members V1 and V7 and outlet shut-off members V4 and V6 are open, whereas the remaining shut-off members V2, V3, V5 and V8 are closed during this second switching period.

At the end of the second switching period the direction of flow is reversed for the first pair, i.e. the first regenerator zone 3 and the second regenerator zone 4. During a third switching period the reactant mixture is fed to the reaction zone 1 through the second regenerator zone 4 and the fourth regenerator zone 6, and the product mixture is withdrawn through the first regenerator zone 3 and the third regenerator zone 5. Inlet shut-off members V3 and V7 and outlet shut-off members V2 and V6 are open, whereas the remaining shut-off members V1, V4, V5 and V8 are closed during this third switching period.

At the end of the third switching period the direction of flow is reversed for the second pair of regenerator zones again. During a fourth switching period the reactant mixture is fed to the reaction zone 1 through the second regenerator zone 4 and the third regenerator zone 5, and the product mixture is withdrawn through the first regenerator zone 3 and the fourth regenerator zone 5. Inlet shut-off members V3 and V5 and outlet shut-off members V2 and V8 are open, whereas the remaining shut-off members V1, V4, V6 and V7 are closed during this fourth switching period.

At the end of the fourth switching period the direction of flow is reversed for the first pair of regenerator zones again. A fifth switching period corresponds to the first switching period and the cycle of periodic switching starts anew. Table 2 shows the directions of flow for each regenerator zone during the subsequent switching periods. The direction of flow that feeds the reactant mixture into the reaction zone is denoted by the term "in", whereas the direction of flow that withdraws the product mixture from the reaction zone is denoted by the term "out".

**Table 2**

| period | 1 | 2 | 3 | 4 | 5 |
|---|---|---|---|---|---|
| first regenerator zone 3 | in | in | out | out | in |
| second regenerator zone 4 | out | out | in | in | out |
| third regenerator zone 5 | in | out | out | in | in |
| fourth regenerator zone 6 | out | in | in | out | out |

One advantage of this periodic switching of pairs of regenerator zones is a higher uniformity in composition and temperature profiles in the overall outlet of the reactor.

In a second switching mode, the regenerator zones are not grouped in pairs, but switched individually with respect to the direction of flow through the regenerator zones. In this example, the number of regenerator zones through which the reactant mixture is fed to the reaction zone is larger than the number of regenerator zones through which the product mixture is withdrawn from the reaction zone during each switching period. Each regenerator zone is used as the withdrawal line during a different switching period.

During a first switching period the reactant mixture is fed to the reaction zone 1 through the first regenerator zone 3, the second regenerator zone 4 and the third regenerator zone 5. The product mixture is withdrawn through the fourth regenerator zone 6 during this period. Inlet shut-off members V1, V3 and V5 and outlet shut-off member V8 are open, whereas the remaining shut-off members V2, V4, V6 and V7 are closed during this first switching period.

At the end of the first switching period the direction of flow is reversed for the third regenerator zone 5 and for the fourth regenerator zone 6. During a second switching period the reactant mixture is fed to the reaction zone 1 through the first regenerator zone 3, the second regenerator zone 4 and the fourth regenerator zone 6, and the product mixture is withdrawn through the third regenerator zone 5. Inlet shut-off members V1, V3 and V7 and outlet shut-off member V6 are open, whereas the remaining shut-off members V2, V4, V5 and V8 are closed during this second switching period.

At the end of the second switching period the direction of flow is reversed for the second regenerator zone 4 and for the third regenerator zone 5. During a third switching period the reactant mixture is fed to the reaction zone 1 through the first regenerator zone 3, the third regenerator zone 5 and the fourth regenerator zone 6, and the product mixture is withdrawn through the second regenerator zone 4. Inlet shut-off members V1, V5 and V7 and outlet shut-off member V4 are open, whereas the remaining shut-off members V2, V3, V6 and V8 are closed during this third switching period.

At the end of the third switching period the direction of flow is reversed for first regenerator zone 3 and for the second regenerator zone 4. During a fourth switching period the reactant mixture is fed to the reaction zone 1 through the second regenerator zone 4, the third regenerator zone 5 and the fourth regenerator zone 6, and the product mixture is withdrawn through the first regenerator zone 3. Inlet shut-off members V3, V5 and V7 and outlet shut-off member V2 are open, whereas the remaining shut-off members V1, V4, V6 and V8 are closed during this fourth switching period.

At the end of the fourth switching period the direction of flow is reversed for the first regenerator zone 3 and for the fourth regenerator zone 6. A fifth switching period corresponds to the first switching period and the cycle of periodic switching starts anew. Table 3 shows the directions of flow for each regenerator zone during the subsequent switching periods.

**Table 3**

| period | 1 | 2 | 3 | 4 | 5 |
|---|---|---|---|---|---|
| first regenerator zone 3 | in | in | in | out | in |
| second regenerator zone 4 | in | in | out | in | in |
| third regenerator zone 5 | in | out | in | in | in |
| fourth regenerator zone 6 | out | in | in | in | out |

One advantage of the unequal numbers of regenerator zones that are used for feeding the reactant mixture and withdrawing the product mixture is a shorter residence time and a steep temperature profile of the product mixture in the regenerator zones used for withdrawing the product. As a result, the concentration of nitric oxide in the product flow and the thermal efficiency of the process are favorably influenced.

### Examples

A rigorous equation-based dynamic model for a process according to Fig. 1 and a process according to Fig. 2 were set up and simulated. The defining equations were derived from quasi-homogeneous heat and material balances. The balances took into account the accumulation of heat and material, the transport processes convection and dispersion, as well as the reaction of nitrogen and oxygen to nitric oxide and the corresponding back reaction in the gas phase. Temperatures and mass fractions of nitrogen, oxygen and nitric oxide were calculated as functions of time and the spatial coordinate along the main direction of flow. The mathematical model was solved numerically. Suitable simulation methods and numerical solvers are known in the art, for example from "Erwin Dieterich, Gheorge Sorescu, Gerhart Eigenberger: Numerische Methoden zur Simulation verfahrenstechnischer Prozesse"; Chemie Ingenieur Technik, 64(2), 136-147, 1992. (English version published as "Numerical methods for the simulation of chemical engineering processes"; International Chemical Engineering, 34(4), 455-468 , 1994.)

### Example 1

As a first example, a reactor with two symmetric regenerator zones according to Fig. 1 was simulated. The regenerator zones 3, 4 were equipped with monolithic structured packings made of magnesium oxide. The hydraulic diameter of the channels in the regenerator zones was 1 mm. The density of the monolithic material was 3300 kg/m³. The void fraction of the regenerator zone was 0.5. The heat transfer coefficient between the gas flow and the walls of the channels in the high temperature section of the regenerator zone was about 400 W/(m² K) and the specific heat transfer area was 2000 m²/m³. These favourable functional characteristics of the regenerator zone enabled efficient quench and efficient heat recovery.

The space velocity in each regenerator zone was 10800 1/h. The cross-sectional load of the sum of all channels in each regenerator zone was 3.85 kg/(m² s). The gaseous reactant mixture fed to the regenerator zones contained 20 vol.-% of oxygen and 80 vol.-% of nitrogen as a simplified model for air. The inlet temperature of the gaseous reactant mixture was 25°C and its pressure 1 bar (abs). In the simulation, heat was provided to the reaction zone by an electrical heater. The temperature inside the reaction zone was set to 2222°C. Under these process conditions, the gas phase reaction reaches the chemical equilibrium and the composition of the product mixture at the outlet of the reaction zone corresponds to the equilibrium composition of the system nitrogen, oxygen and nitric oxide.

The mass fraction of nitric oxide in the product mixture leaving the regenerator zone was 1.87%. The back-splitting reaction in the regenerator zone caused a yield loss of 20.9% compared to the yield achieved in the reaction zone. The specific energy consumption was 1.98 kWh/kg nitric oxide.

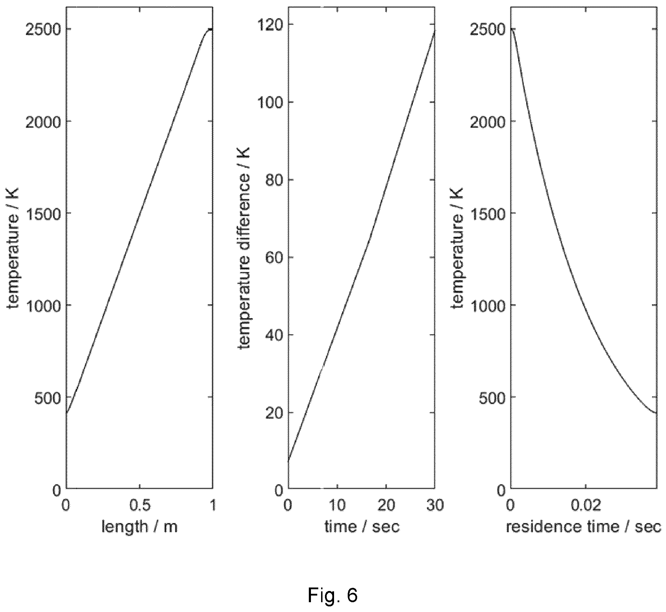

The switchover between the reversals of the direction of flow took place after a period of 30 seconds. Fig. 6 shows temperature profiles for example 1 at the end of a period immediately before switching the shut-off members V1, V2, V3, V4 and thus reversing the direction of flow through the regenerator zones and the reaction zone. On the left-hand side of Fig. 6 the axial temperature profile inside the regenerator zone in use as outlet for the product mixture is shown. The hot product mixture enters the high temperature section of the regenerator zone at length 1 m (right) at a temperature of 2222°C. Inside the regenerator zone the product mixture flows from the high temperature section (right) to the low temperature section (left) of the regenerator zone and is nearly linearly cooled down

On the right-hand side of Fig. 6 the same temperature profile is shown depending on the residence time of the product mixture inside the regenerator zone. The total residence time of the product mixture from entering the regenerator zone to leaving it was 39.2 ms (milliseconds). The temperature of the product mixture entering the high temperature section of the regenerator zone dropped to 2000°C in 2.8 ms. This time span is denoted as "quench time" here and in the following. The temperature curve shows a favourable steep gradient in the high temperature section of the regenerator zones adjacent to the reaction zone. The gradient flattened in the low temperature section of the regenerator zones.

In the middle of Fig. 6 the course of the temperature difference between the overall inlet of the reactant mixture and the outlet of the product mixture from the regenerator zone for one period of 30 s is shown. The inlet temperature of the reactant mixture was set to 25°C and was constant over time. The outlet temperature of the product mixture and thus the temperature difference shown in the middle of Fig. 6 increased nearly linearly. The mean value of the temperature difference over the period of 30 s was 65 K. The complement of the ratio of this value to the difference between the reaction temperature and the inlet temperature defines the efficiency of heat recovery, which was 100% - 65 K / (2495 K - 298 K) = 97% in this example.

### Example 2

As a second example, a reactor with two symmetric regenerator zones according to Fig. 2 was simulated. The configuration of the reactor and the process conditions were identical to example 1 apart from the heat input device. In example 2 a plasma torch was simulated as heat input device. To ensure a temperature of 2222°C in the reaction zone a plasma stream produced with pure nitrogen with a mass flow rate of 2.5% of the reactant mixture feed flow rate was used. The specific enthalpy of the plasma stream was 5.96 MJ/kg. Due to the additional plasma stream the mass flow rate of the product mixture leaving the regenerator zone was 2.5% higher than the mass flow rate of the gaseous reactant mixture entering the other regenerator zone. As a result, the quench time increased to 8.1 ms and the mass fraction of nitric oxide in the product mixture leaving the regenerator zone decreased to 1.7%. The back-splitting reaction in the regenerator zone caused a yield loss of 28.1% compared to the yield achieved in the reaction zone. The specific energy consumption was 3.52 kWh/kg nitric oxide.

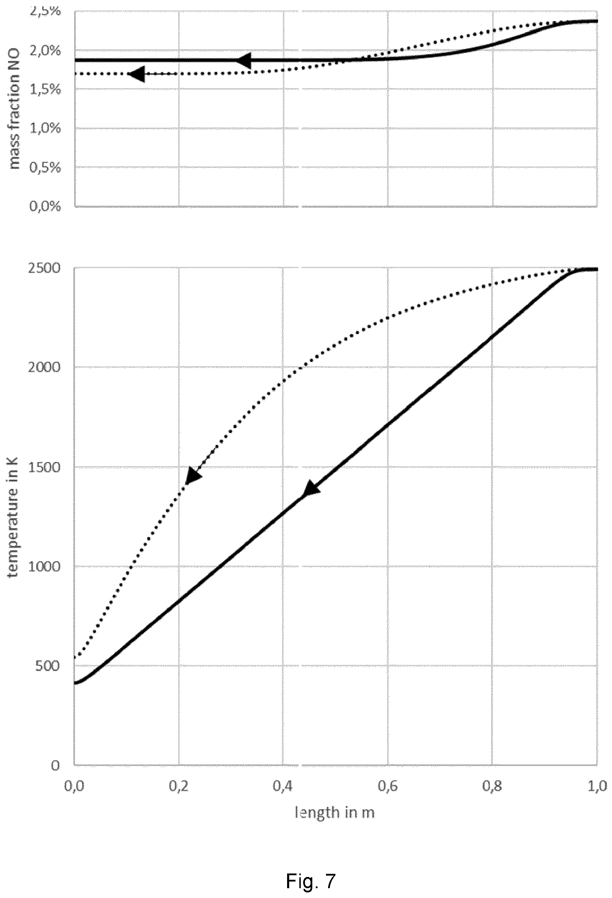

Fig. 7 shows the profiles of the nitric oxide mass fraction (top of Fig. 7) and the temperature (bottom of Fig. 7) inside the regenerator zone in use as outlet for the product mixture at the end of a period immediately before switching the shut-off members V1, V2, V3, V4 and thus reversing the direction of flow through the regenerator zones and the reaction zone. The solid lines show the results of example 1 with an electric heater as heat input device. The temperature profile for example 1 in the bottom of Fig. 7 is identical to the left-hand side of Fig. 6. The dotted lines show the results of example 2 with an additional mass flow rate input due to the plasma torch. As can be seen from Fig. 7 the temperature profile for example 2 is not linear anymore, but convex with the effect that the product mixture entering the regenerator zone (direction of flow from right to left in Fig. 7) is exposed to a higher temperature over the whole length of the regenerator zone. This results in a higher rate of the back-splitting reaction compared to the case of example 1.

### Example 3

As a third example, the reactor and process of example 2 was used as a basis, but a part of the product mixture was withdrawn from the reaction zone 1 through withdrawal line 7. The flow rate of the withdrawal stream was set to 3.5% of the reactant mixture feed flow rate. Thus, the mass flow rate of the product mixture leaving the regenerator zone was 1% lower than the feed flow rate of the reactant mixture entering the other regenerator zone. As a result, the quench time decreased to 2.1 ms and the mass fraction of nitric oxide in the product mixture leaving the regenerator zone increased to 1.99%. The back-splitting reaction in the regenerator zone caused a yield loss of 15.9% compared to the yield achieved in the reaction zone. The specific energy consumption was 2.01 kWh/kg nitric oxide.

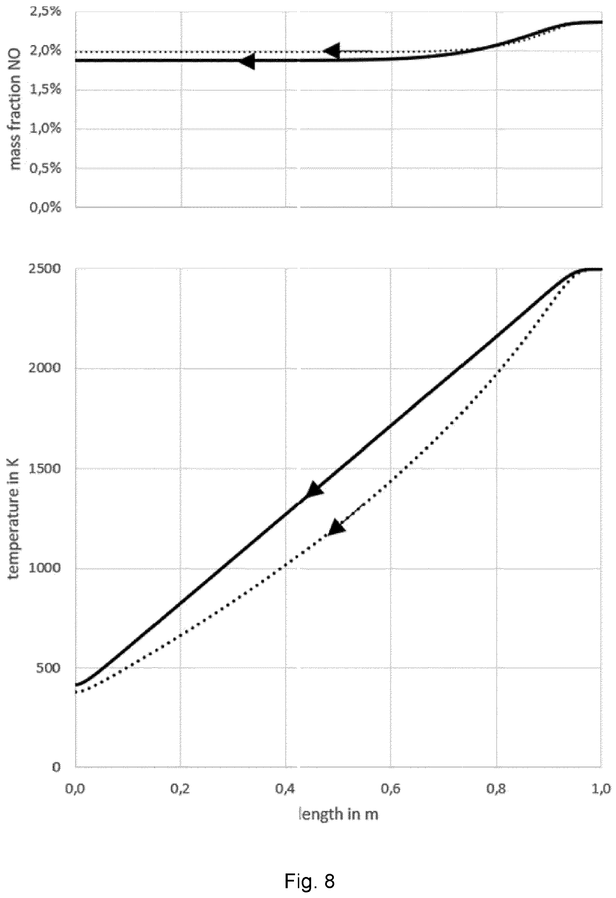

Fig. 8 shows the profiles of the nitric oxide mass fraction (top of Fig. 8) and the temperature (bottom of Fig. 8) inside the regenerator zone in use as outlet for the product mixture at the end of a period immediately before switching the shut-off members V1, V2, V3, V4 and thus reversing the direction of flow through the regenerator zones and the reaction zone. The solid lines show the results of example 1 with an electric heater as heat input device. The temperature profile for example 1 in the bottom of Fig. 8 is identical to the left-hand side of Fig. 6. The dotted lines show the results of example 3 with an additional mass flow rate input due to the plasma torch and a withdrawal of a part of the product mixture from the reaction zone. As can be seen from Fig. 8 the temperature profile for example 3 is not linear anymore, but concave with the effect that the product mixture entering the regenerator zone (direction of flow from right to left in Fig. 8) is exposed to a lower temperature over the whole length of the regenerator zone. This results in a lower rate of the back-splitting reaction compared to the case of example 1.

### Example 4

Experiments were conducted to validate the simulation results. The experiments were conducted in a reaction apparatus comprising a straight single ceramic tube with three concentric layers of different ceramic-oxide materials. The outermost layer was a gas-tight tube made from aluminium oxide (Al₂O₃) with a length of 1500 mm (millimetres), an inner diameter of 80 mm and an outer diameter of 100 mm. The intermediate layer was built up by tube segments made from porous aluminium oxide foam (HalFoam by Morgan Advanced Materials), functioning as an insulation layer. The tube segments had a length of 200 mm, an inner diameter of 50 mm and an outer diameter of 80 mm each and were stacked upon each other in the longitudinal direction of the tube axis. The inner layer was built up by tube segments made from magnesium oxide (MgO). The tube segments had a length of 200 mm, an inner diameter of 40 mm and an outer diameter of 50 mm.

The multi-layer tube is structured in several functional sections in the longitudinal direction of the tube axis. One end of the tube comprises the reaction zone with a plasma torch as a first heat input device. The burner of the plasma torch (type F4MB-XL by Sulzer Metco) was operated with an Argon (Ar) plasma at an effective power input of 6.5 kW. The electric current through the plasma torch was 615 Ampere, the voltage between the anode and the cathode of the plasma torch was 29 Volt. The Argon flowrate to the plasma burner was 1.8 Nm³/h (norm cubic metres per hour). The reaction zone was embedded in an electrically operated furnace surrounding the reaction zone in the circumferential direction as a second heat input device. The electrical heater was set to a constant temperature of 1500°C. The length of the reaction section was 700 mm. The reaction section was closed on one end apart from a multitude of apertures through which air as the reactant could flow into the reaction zone.

The next functional section of the tube neighbouring the reaction zone and being fluidly connected therewith was the high temperature section of the regenerator zone. This section comprised 25 perforated disks made of yttrium(III) oxide (Y₂O₃) stacked upon each other with an outer diameter of 40 mm and a length of 10 mm each. The disks contained 85 bores with a diameter of 3 mm that where distributed over the cross-section of the disks in a regular pattern. The free cross-section of each disk corresponded to 48% of the total cross-section of the disk. This value corresponds to the void fraction of the packing comprising the stacked disks. The perforated disks were supported in the axial direction away from the reaction zone by disks made from zirconium dioxide (ZrO₂) foam. The inner space of the tube below the zirconium dioxide foam was filled with quartz rings and constituted the low temperature section of the regenerator zone. The outer wall of the multi-layer tube constituting the regenerator zone was surrounded by a cooling jacket that was flown through by water to rapidly cool the produced gas flowing inside the tube.

The reaction apparatus was operated under stationary conditions in the sense that ambient air as the gaseous reaction mixture was fed to the reaction zone of the apparatus with a constant flow rate and the product mixture was withdrawn from the low-temperature regenerator zone. The reactant flow rate was 4.7 Nm³/h. The temperature inside the reaction zone was determined to be 2100°C by calculation methods based on thermal energy balances known in the art. The pressure difference between the inlet of air into the reaction zone and the outlet of the reactor was determined to 80 mbar (millibar) by a differential pressure gauge (type Deltabar S PMD 75 by Endress+Hauser).

The residence time in the reaction zone was 100 ms (milliseconds), the residence time in the regenerator zone was 20 ms. The temperature of the product mixture at the outlet of the regenerator zone was determined to 400°C using a type K thermocouple. Thus, the average temperature gradient in the regenerator zone was 85000 K/s (Kelvin per second). The NOₓ content of the product mixture withdrawn from the regenerator zone was determined to 1.5 vol-% by a FTIR detector (type Antaris IGS by ThermoFisher). Considering the dilution effect of the Argon introduced by the plasma torch, the volumetric fraction of NOₓ in the product mixture was calculated to 2.1 vol-%.

Similar experiments were conducted with different packings for the high temperature section of the regenerator zone. In one experiment 35 perforated disks made of magnesium oxide (MgO) were used. The disks hat a length of 7 mm, an outer diameter of 40 mm and contained 72 bores with a diameter of 3 mm that where distributed over the cross-section of the disks in a regular pattern. The residence times and other performance indicators mentioned above were nearly identical to those obtained with the yttrium oxide packing.

It was found that the experimental results matched the simulation results very well, in particular the results with respect to reaction kinetics and rapid cooling of the gaseous product mixture inside the regenerator zone. The temperature drop inside the regenerator zone was found to be sufficient to successfully suppress any considerable back reaction of nitric oxide (NO). A further finding was that the packings of the regenerator zone had no considerable catalytic activity regarding the formation and decomposition of NO. At the end of the experiments, the packings used in the regenerator zone were inspected and found to be intact. Thus, the packings used in the experiments were resistant against the high temperature gradient inside the regenerator zone.

## Claims

1. A method for the production of nitric oxide from a gaseous reactant mixture containing oxygen and nitrogen in a reactor comprising a reaction zone (1) with a heat input device (2) and at least two regenerator zones (3, 4, 5, 6), each regenerator zone having a low temperature section on one end and a high temperature section at the other end of the regenerator zone, the high temperature sections being fluidically connected to the reaction zone (1), the method comprising the steps of:
a) supplying heat through the heat input device (2) to the reaction zone (1) until a temperature of from 1500°C to 2500°C is reached in the reaction zone (1);
b) passing the reactant mixture through a first regenerator zone (3) into the reaction zone (1) in which the reactant mixture reacts to form a product mixture, passing the product mixture from the reaction zone (1) through a second regenerator zone (4) and withdrawing at least part of the product mixture from the second regenerator zone (4);
c) reversing the direction of flow and passing the reactant mixture through the second regenerator zone (4) into the reaction zone (1) in which the reactant mixture reacts to form a product mixture, passing the product mixture from the reaction zone (1) through the first regenerator zone (3) and withdrawing at least part of the product mixture from the first regenerator zone (3); and
d) reversing the direction of flow and periodically repeating steps b) and c); **characterized in that** the high temperature sections of the regenerator zones (3, 4, 5, 6) comprise a plurality of channels with a hydraulic diameter of 0.5 mm to 5 mm each, the inner walls of which are made of oxide ceramics.

2. The method according to claim 1, **characterized in that** the gaseous reactant mixture is air or the gaseous reactant mixture contains from 30 vol.-% to 70 vol.-% of oxygen, 30 vol.-% to 70 vol.-% of nitrogen and less than 10 vol.-% of further substances other than oxygen and nitrogen.

3. The method according to any of the preceding claims, **characterized in that** the space velocity in each regenerator zone during steps b) and c) is from 300 1/h to 50000 1/h, wherein the space velocity is the ratio of the standard volumetric flow of the reactant mixture or the product mixture through the regenerator zone and the empty volume of the regenerator zone.

4. The method according to any of the preceding claims, **characterized in that** the cross-sectional load of the sum of all channels in each regenerator zone during steps b) and c) is from 0.5 kg/(m² s) to 10 kg/(m² s).

5. The method according to any of the preceding claims, **characterized in that** the switchover between steps b) and c) takes place in each case after a period of 5 to 250 seconds, preferably after a period of 10 to 120 seconds, more preferably after a period of 20 to 60 seconds.

6. The method according to any of the preceding claims, **characterized in that** at least that part of the high temperature section of the regenerator zones (3, 4, 5, 6) that is connected to the reaction zone (1) is equipped with structured packings.

7. The method according to any of the preceding claims, **characterized in that** the ratio of the free volume of the reaction zone (1) to the sum of the free volumes of the regenerator zones (3, 4, 5, 6) is from 0.7 to 10.

8. The method according to any of the preceding claims, **characterized in that** the surface of the inner wall of the reaction zone (1) is made of oxide ceramics.

9. The method according to any of the preceding claims, **characterized in that** the oxide ceramics in at least a part of the high temperature sections of the regenerator zones (3, 4, 5, 6) comprises magnesium oxide, calcium oxide, yttrium oxide, zirconium(IV) oxide and/or mixtures thereof.

10. The method according to any of the preceding claims, **characterized in that** the heat input device (2) comprises an arc source, a microwave source or a plasma source, in particular a plasma torch.

11. The method according to any of the preceding claims, **characterized in that** the heat input device (2) comprises an electric heater, an induction heater or a resistance heater.

12. The method according to any of the preceding claims, **characterized in that** the reaction zone (1) has a withdrawal line through which a part of the product mixture is withdrawn while flowing through the reaction zone (1).

13. The method according to any of the preceding claims, **characterized in that** the regenerator zones (3, 4, 5, 6) are arranged on opposite sides of the reaction zone (1).

14. The method according to any of the claims 1 to 12, **characterized in that** the regenerator zones (3, 4, 5, 6) are arranged on the same side of the reaction zone (1), and the inner wall of the reaction zone (1) has a curvature for diverting the flow from the outlet of one regenerator zone into the inlet of the other regenerator zone.

15. A reactor for the production of nitric oxide from a gaseous reactant mixture containing oxygen and nitrogen, the reactor comprising a reaction zone (1) with a heat input device (2) and at least a first regenerator zone (3) and at least a second regenerator zone (4), each regenerator zone having a low temperature section on one end and a high temperature section at the other end of the regenerator zone, the high temperature sections of both regenerator zones being fluidically connected to the reaction zone (1), wherein the heat input device (2) is configured to supply heat to the reaction zone (1) for maintaining a temperature from 1500°C to 2500°C in the reaction zone (1), the first regenerator zone (3) and the second regenerator zone (4) are configured to pass the gaseous reactant mixture either through the first regenerator zone (3) into the reaction zone (1) and from the reaction zone (1) through the second regenerator zone (4) or through the second regenerator zone (4) into the reaction zone (1) and from the reaction zone (1) through the first regenerator zone (3), **characterized in that** the high temperature sections of the regenerator zones (3, 4) comprise a plurality of channels with a hydraulic diameter of 0.5 mm to 5 mm each, the inner walls of which are made of oxide ceramics.

## Patentansprüche

1. Verfahren zur Herstellung von Stickoxid aus einem gasförmigen Reaktantengemisch, das Sauerstoff und Stickstoff enthält, in einem Reaktor, der eine Reaktionszone (1) mit einer Wärmezufuhrvorrichtung (2) und wenigstens zwei Regeneratorzonen (3, 4, 5, 6) umfasst, wobei jede Regeneratorzone einen Niedertemperaturabschnitt an einem Ende und einen Hochtemperaturabschnitt an dem anderen Ende der Regeneratorzone aufweist, wobei die Hochtemperaturabschnitte fluidisch mit der Reaktionszone (1) verbunden sind, wobei das Verfahren die Schritte umfasst:
a) Zuführen von Wärme durch die Wärmezufuhrvorrichtung (2) zu der Reaktionszone (1), bis eine Temperatur von 1500 °C bis 2500 °C in der Reaktionszone (1) erreicht ist;
b) Leiten des Reaktantengemischs durch eine erste Regeneratorzone (3) in die Reaktionszone (1), in der das Reaktantengemisch reagiert, um ein Produktgemisch zu bilden, Leiten des Produktgemischs aus der Reaktionszone (1) durch eine zweite Regeneratorzone (4) und Entnehmen wenigstens eines Teils des Produktgemischs aus der zweiten Regeneratorzone (4);
c) Umkehren der Strömungsrichtung und Leiten des Reaktantengemischs durch die zweite Regeneratorzone (4) in die Reaktionszone (1), in der das Reaktantengemisch reagiert, um ein Produktgemisch zu bilden, Leiten des Produktgemischs aus der Reaktionszone (1) durch die erste Regeneratorzone (3) und Entnehmen wenigstens eines Teils des Produktgemischs aus der ersten Regeneratorzone (3); und
d) Umkehren der Strömungsrichtung und periodisches Wiederholen der Schritte b) und c);
**dadurch gekennzeichnet, dass** die Hochtemperaturabschnitte der Regeneratorzonen (3, 4, 5, 6) eine Vielzahl von Kanälen mit einem hydraulischen Durchmesser von jeweils 0,5 mm bis 5 mm umfassen, deren Innenwände aus Oxidkeramik bestehen.

2. Verfahren nach Anspruch 1, **dadurch gekennzeichnet, dass** das gasförmige Reaktantengemisch Luft ist oder das gasförmige Reaktantengemisch von 30 Vol.-% bis 70 Vol.-% Sauerstoff, 30 Vol.-% bis 70 Vol.-% Stickstoff und weniger als 10 Vol.-% an weiteren, von Sauerstoff und Stickstoff verschiedenen Stoffen enthält.

3. Verfahren nach einem der vorstehenden Ansprüche, **dadurch gekennzeichnet, dass** die Raumgeschwindigkeit in jeder Regeneratorzone während der Schritte b) und c) 300 1/h bis 50000 1/h beträgt, wobei die Raumgeschwindigkeit das Verhältnis des Standardvolumenstroms des Reaktantengemischs oder des Produktgemischs durch die Regeneratorzone und des Leervolumens der Regeneratorzone ist.

4. Verfahren nach einem der vorstehenden Ansprüche, **dadurch gekennzeichnet, dass** die Querschnittsbeladung der Summe aller Kanäle in jeder Regeneratorzone während der Schritte b) und c) von 0,5 kg/(m² s) bis 10 kg/(m² s) beträgt.

5. Verfahren nach einem der vorstehenden Ansprüche, **dadurch gekennzeichnet, dass** das Umschalten zwischen den Schritten b) und c) jeweils nach einer Zeitdauer von 5 bis 250 Sekunden, vorzugsweise nach einer Zeitdauer von 10 bis 120 Sekunden, bevorzugter nach einer Zeitdauer von 20 bis 60 Sekunden, erfolgt.

6. Verfahren nach einem der vorstehenden Ansprüche, **dadurch gekennzeichnet, dass** wenigstens der Teil des Hochtemperaturabschnitts der Regeneratorzonen (3, 4, 5, 6), der mit der Reaktionszone (1) verbunden ist, mit strukturierten Packungen ausgestattet ist.

7. Verfahren nach einem der vorstehenden Ansprüche, **dadurch gekennzeichnet, dass** das Verhältnis des freien Volumens der Reaktionszone (1) zu der Summe der freien Volumina der Regeneratorzonen (3, 4, 5, 6) von 0,7 bis 10 beträgt.

8. Verfahren nach einem der vorstehenden Ansprüche, **dadurch gekennzeichnet, dass** die Oberfläche der Innenwand der Reaktionszone (1) aus Oxidkeramik besteht.

9. Verfahren nach einem der vorstehenden Ansprüche, **dadurch gekennzeichnet, dass** die Oxidkeramik in wenigstens einem Teil der Hochtemperaturabschnitte der Regeneratorzonen (3, 4, 5, 6) Magnesiumoxid, Calciumoxid, Yttriumoxid, Zirkonium(IV)-oxid und/oder Gemische davon umfasst.

10. Verfahren nach einem der vorstehenden Ansprüche, **dadurch gekennzeichnet, dass** die Wärmezufuhrvorrichtung (2) eine Lichtbogenquelle, eine Mikrowellenquelle oder eine Plasmaquelle, insbesondere einen Plasmabrenner, umfasst.

11. Verfahren nach einem der vorstehenden Ansprüche, **dadurch gekennzeichnet, dass** die Wärmezufuhrvorrichtung (2) eine elektrische Heizvorrichtung, eine Induktionsheizvorrichtung oder eine Widerstandsheizvorrichtung umfasst.

12. Verfahren nach einem der vorstehenden Ansprüche, **dadurch gekennzeichnet, dass** die Reaktionszone (1) eine Entnahmeleitung aufweist, durch die ein Teil des Produktgemischs beim Strömen durch die Reaktionszone (1) entnommen wird.

13. Verfahren nach einem der vorstehenden Ansprüche, **dadurch gekennzeichnet, dass** die Regeneratorzonen (3, 4, 5, 6) an gegenüberliegenden Seiten der Reaktionszone (1) angeordnet sind.

14. Verfahren nach einem der Ansprüche 1 bis 12, **dadurch gekennzeichnet, dass** die Regeneratorzonen (3, 4, 5, 6) an der gleichen Seite der Reaktionszone (1) angeordnet sind und die Innenwand der Reaktionszone (1) eine Krümmung zum Umlenken der Strömung von dem Auslass einer Regeneratorzone in den Einlass der anderen Regeneratorzone aufweist.

15. Reaktor zur Herstellung von Stickoxid aus einem gasförmigen Reaktantengemisch, das Sauerstoff und Stickstoff enthält, der Reaktor umfassend eine Reaktionszone (1) mit einer Wärmezufuhrvorrichtung (2) und wenigstens einer ersten Regeneratorzone (3) und wenigstens einer zweiten Regeneratorzone (4), wobei jede Regeneratorzone einen Niedertemperaturabschnitt an einem Ende und einen Hochtemperaturabschnitt an dem anderen Ende der Regeneratorzone aufweist, wobei die Hochtemperaturabschnitte beider Regeneratorzonen fluidisch mit der Reaktionszone (1) verbunden sind, wobei die Wärmezufuhrvorrichtung (2) dafür gestaltet ist, der Reaktionszone (1) Wärme zuzuführen, um eine Temperatur von 1500 °C bis 2500 °C in der Reaktionszone (1) aufrechtzuerhalten, die erste Regeneratorzone (3) und die zweite Regeneratorzone (4) dafür gestaltet sind, das gasförmige Reaktantengemisch entweder durch die erste Regeneratorzone (3) in die Reaktionszone (1) und aus der Reaktionszone (1) durch die zweite Regeneratorzone (4) oder durch die zweite Regeneratorzone (4) in die Reaktionszone (1) und aus der Reaktionszone (1) durch die erste Regeneratorzone (3) zu leiten, **dadurch gekennzeichnet, dass** die Hochtemperaturabschnitte der Regeneratorzonen (3, 4) eine Vielzahl von Kanälen mit einem hydraulischen Durchmesser von jeweils 0,5 mm bis 5 mm umfassen, deren Innenwände aus Oxidkeramik bestehen.

## Revendications

1. Procédé pour la production d'oxyde nitrique à partir d'un mélange de réactifs gazeux contenant de l'oxygène et de l'azote dans un réacteur comprenant une zone de réaction (1) dotée d'un dispositif d'apport de chaleur (2) et au moins deux zones de régénération (3, 4, 5, 6), chaque zone de régénération ayant une section à basse température sur une extrémité et une section à haute température à l'autre extrémité de la zone de régénération, les sections à haute température étant en raccordement fluidique avec la zone de réaction (1), le procédé comprenant les étapes consistant à :
a) fournir de la chaleur à la zone de réaction (1) grâce au dispositif d'apport de chaleur (2) jusqu'à ce qu'une température allant de 1500 °C à 2500 °C soit atteinte dans la zone de réaction (1) ;
b) faire passer le mélange de réactifs, en passant par une première zone de régénération (3), dans la zone de réaction (1) dans laquelle le mélange de réactifs réagit pour former un mélange de produits, faire passer le mélange de produits de la zone de réaction (1) dans une seconde zone de régénération (4) et soutirer au moins une partie du mélange de produits de la seconde zone de régénération (4) ;
c) inverser le sens de circulation et faire passer le mélange de réactifs, en passant par la seconde zone de régénération (4), dans la zone de réaction (1) dans laquelle le mélange de réactifs réagit pour former un mélange de produits, faire passer le mélange de produits de la zone de réaction (1) dans la première zone de régénération (3) et soutirer au moins une partie du mélange de produits de la première zone de régénération (3) ; et
d) inverser le sens de circulation et répéter périodiquement les étapes b) et c) ;
**caractérisé en ce que** les sections à haute température des zones de régénération (3, 4, 5, 6) comprennent une pluralité de canaux présentant un diamètre hydraulique de 0,5 mm à 5 mm chacun, dont les parois intérieures sont constituées de céramique à base d'oxyde.

2. Procédé selon la revendication 1, **caractérisé en ce que** le mélange de réactifs gazeux est de l'air ou le mélange de réactifs gazeux contient de 30 % en volume à 70 % en volume d'oxygène, de 30 % en volume à 70 % en volume d'azote et moins de 10 % en volume de substances supplémentaires autres que l'oxygène et l'azote.

3. Procédé selon l'une quelconque des revendications précédentes, **caractérisé en ce que** la vitesse spatiale dans chaque zone de régénération pendant les étapes b) et c) va de 300 l/h à 50000 l/h, la vitesse spatiale étant le rapport du débit volumique standard du mélange de réactifs ou du mélange de produits dans la zone de régénération et du volume vide de la zone de régénération.

4. Procédé selon l'une quelconque des revendications précédentes, **caractérisé en ce que** la charge de la section transversale de la somme de tous les canaux dans chaque zone de régénération pendant les étapes b) et c) va de 0,5 kg/ (m²s) à 10 kg/ (m²s) .

5. Procédé selon l'une quelconque des revendications précédentes, **caractérisé en ce que** la commutation entre les étapes b) et c) s'effectue à chaque fois après une période de 5 à 250 secondes, de préférence après une période de 10 à 120 secondes, de préférence encore après une période de 20 à 60 secondes.

6. Procédé selon l'une quelconque des revendications précédentes, **caractérisé en ce qu'**au moins la partie de la section à haute température des zones de régénération (3, 4, 5, 6) qui est raccordée à la zone de réaction (1) est pourvue de garnissages structurés.

7. Procédé selon l'une quelconque des revendications précédentes, **caractérisé en ce que** le rapport du volume libre de la zone de réaction (1) à la somme des volumes libres des zones de régénération (3, 4, 5, 6) va de 0,7 à 10.

8. Procédé selon l'une quelconque des revendications précédentes, **caractérisé en ce que** la surface de la paroi intérieure de la zone de réaction (1) est constituée de céramique à base d'oxyde.

9. Procédé selon l'une quelconque des revendications précédentes, **caractérisé en ce que** la céramique à base d'oxyde dans au moins une partie des sections à haute température des zones de régénération (3, 4, 5, 6) comprend de l'oxyde de magnésium, de l'oxyde de calcium, de l'oxyde d'yttrium, de l'oxyde de zirconium(IV) et/ou des mélanges de ceux-ci.

10. Procédé selon l'une quelconque des revendications précédentes, **caractérisé en ce que** le dispositif d'apport de chaleur (2) comprend une source à arc, une source de micro-ondes ou une source de plasma, en particulier une torche à plasma.

11. Procédé selon l'une quelconque des revendications précédentes, **caractérisé en ce que** le dispositif d'apport de chaleur (2) comprend un dispositif de chauffage électrique, un dispositif de chauffage à induction ou un dispositif de chauffage à résistance.

12. Procédé selon l'une quelconque des revendications précédentes, **caractérisé en ce que** la zone de réaction (1) a une conduite de soutirage par laquelle une partie du mélange de produits est soutirée alors qu'il circule dans la zone de réaction (1).

13. Procédé selon l'une quelconque des revendications précédentes, **caractérisé en ce que** les zones de régénération (3, 4, 5, 6) sont disposées sur des côtés opposés de la zone de réaction (1).

14. Procédé selon l'une quelconque des revendications 1 à 12, **caractérisé en ce que** les zones de régénération (3, 4, 5, 6) sont disposées du même côté de la zone de réaction (1) et la paroi intérieure de la zone de réaction (1) a une courbure pour l'envoi du flux de la sortie d'une zone de régénération vers l'entrée de l'autre zone de régénération.

15. Réacteur pour la production d'oxyde nitrique à partir d'un mélange de réactifs gazeux contenant de l'oxygène et de l'azote, le réacteur comprenant une zone de réaction (1) dotée d'un dispositif d'apport de chaleur (2) et au moins une première zone de régénération (3) et au moins une seconde zone de régénération (4), chaque zone de régénération ayant une section à basse température sur une extrémité et une section à haute température à l'autre extrémité de la zone de régénération, les sections à haute température des deux zones de régénération étant en raccordement fluidique avec la zone de réaction (1), dans lequel le dispositif d'apport de chaleur (2) est conçu pour fournir de la chaleur à la zone de réaction (1) pour le maintien d'une température allant de 1500 °C à 2500 °C dans la zone de réaction (1), la première zone de régénération (3) et la seconde zone de régénération (4) sont conçues pour faire passer le mélange de réactifs gazeux soit dans la zone de réaction (1) en passant par la première zone de régénération (3) et hors de la zone de réaction (1) en passant par la seconde zone de régénération (4), soit dans la zone de réaction (1) en passant par la seconde zone de régénération (4) et hors de la zone de réaction (1) en passant par la première zone de régénération (3), **caractérisé en ce que** les sections à haute température des zones de régénération (3, 4) comprennent une pluralité de canaux présentant un diamètre hydraulique de 0,5 mm à 5 mm chacun, dont les parois intérieures sont constituées de céramique à base d'oxyde.
